# EUROPEAN PATENT APPLICATION

(11) **EP 0 849 394 A1**
(43) Date of publication of application: **24.06.1998**
(21) Application number: 97203990.3
(22) Date of filing: 18.12.1997
(51) Int. Cl.: D21B 1/36

(54) **Method for increasing the bulk of fibrous material, and apparatus for treating fibrous material**

(30) Priority: 19.12.1996 NL 1004844
(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Krijnen, Erik Sybrand, 3135 Gt Vlaardingen (NL)
(74) Representative: Smulders, Theodorus A.H.J., Ir.

(57) **Abstract**

The present invention relates to a method for increasing the bulk of fibrous material, wherein fibers are heated under pressure, after which the pressure is released rapidly. Further, the invention relates to the use of a steam explosion to increase the bulk of paper fibers. This method and use lend themselves in particular for increasing the bulk of wastepaper fibers which can subsequently be used advantageously in the manufacture of, for instance, solid cardboard.

## Description

The invention relates to a method for increasing the bulking properties of fibrous material, in particular paper fibers and more in particular wastepaper fibers. The invention moreover relates to an apparatus for treating such fibrous material.

The invention particularly resides in the field of manufacturing solid cardboard and other paper products.

Solid cardboard is a paperlike material, on which relatively few strength requirements are imposed. During the manufacture of this type of cardboard, efforts are directed to making a product of a largest possible volume with as little raw material as possible. For other paper products, too, it is important to obtain a large volume by the use of as little raw material as possible, for instance in the case of (the softening of) tissue paper.

In this specification and the appended claims, "bulking" is defined by dividing the thickness of a sheet of paper by the weight per square meter of a standard amount of paper fibers. The degree of bulking is the gain that can be realized in the paper thickness by the use of the method according to the invention.

In practice, paper and cardboard are manufactured from many types of fibers, such as animal, mineral or synthetic fibers, but most paper and cardboard is prepared from fibrous material of vegetable origin. Paper and good qualities of cardboard are manufactured in particular from rags, cellulose and/or bleached pulp. For manufacturing solid cardboard, however, less high-grade raw materials may be started from, such as wood pulp, unbleached pulp, straw pulp and/or wastepaper.

As regards the reuse of wastepaper in the paper and cardboard industries, much is already known. In particular, much research has been conducted into disintegrating wastepaper into fibers again (defibrating) and de-inking this raw material.

For instance, it is known to subject wastepaper fibers to a steam explosion. In an article titled "Steam Explosion Technology and Fiber Recycling", presented during the TAPPI conference in March 1991, it is described that contaminating compounds, such as ink particles, can be removed from wastepaper by subjecting it to a steam explosion at a high temperature and pressure. To that end, the wastepaper is brought to a pressure of more than 20 atmosphere and a temperature in excess of 190°C, after which the cooked mass is suddenly exposed to atmospheric conditions. Moreover, this method provides to an important extent that wastepaper scraps are decomposed into fibers. No mention is made of any bulking effect.

The above article is discussed in US Patent 5,262,003. In this patent, it is argued that this known steam explosion method has the drawback that the strength properties of the paper to be manufactured decrease substantially.

US-A-5,262,003 subsequently describes an improvement over this technique. This patent specification describes a method wherein fibrous material in a closed vessel is moistened and then treated with steam under more moderate temperature and pressure conditions, after which the steam is also released explosively. In this manner, it is found that the advantages according to the article presented during the TAPPI conference are obtained, while the strength properties for the paper to be manufactured decrease less.

International patent application 92/10606 also describes a treatment of wastepaper at a high temperature (between 160-230°C) in the presence of steam. Here, in addition to defibration, an improved de-inking is obtained. In this publication, directed to increasing the pulp consistency, the percentage of fibers in water, it is concluded that in particular the setting of the temperature is important for attaining the intended effect. A steam explosion only provides a marginal improvement for de-inking.

Whereas in the prior art measures are taken to maintain the strength properties of fibrous material as much as possible, the present invention, by contrast, makes use of the loss of strength. Indeed, it has been found that if fibrous material is subjected to a heating operation under pressure, after which the pressure is let off very rapidly, this results in a considerable gain in bulk of the fiber. According as the bulk of fibers increases, a paper product can thereby be manufactured which contains less raw material per unit of volume.

Accordingly, the object of the invention is to provide a method for increasing the bulk of fibrous material, wherein fibers are heated under pressure, after which the pressure is let off rapidly.

Moreover, the invention relates to a method for manufacturing solid cardboard, wherein as fibrous material, the fibrous material obtained utilizing the method for increasing the bulk according to the invention is used at least partly.

The method according to the invention is carried out with fibrous material, wherein the fibers have a lumen in which moisture, generally water, is present. These fibers will in particular be of a vegetable nature, although other lumen-containing fibers may also be considered.

In a preferred embodiment, the fibers are presoaked in water, permitting the lumina of the fibers to fill up with water through suction.

Fresh fibrous material can be used. However, the method according to the invention is preferably used with fibers which have already lost much of their mechanical properties. Hence, the method according to the invention can very suitably be applied to fibrous material that is recycled, such as wastepaper fibers.

It is essential that during the heating step under pressure, the fibers are heated so that the moisture is brought to a temperature above its atmospheric boiling point. This feature is essential, because a sudden pressure release will then involve a quick transition of the moisture into the gas phase. The attendant change of volume will lead to destruction of the fibers. During this process, the fiber residues remain interconnected at least partly. It is assumed that this causes the gain in bulk.

In the widest sense, according to the invention, fibrous material is rapidly subjected to a pressure reduction. In this manner, after or not after a phase transition, moisture will build up such a pressure in the lumen of the fiber that the fiber will be broken down. This process will be accelerated if the moisture is heated.

The pressure reduction may take place both by pressurizing the fibers followed by letting off the pressure rapidly, and by creating a sudden pressure difference with a space under reduced pressure.

The creation of a pressure difference must be carried out so fast that the moisture in the lumen of the fibers develops such a high pressure relative to the outside atmosphere that the fibrous material is destructed. The minimum height of the pressure difference and the minimum speed of the creation thereof will depend on the fibrous material and the amount of moisture present in the lumina of the fibrous material. All this can be set by experiment.

By the use of the method according to the invention, the degree of bulk of the fibers can increase to above 10% and even to above 20%. In this regard, the bulk is the thickness of a sheet of paper divided by the weight per square meter of a standard amount of paper fibers.

Good results are obtained when the fibers are heated to temperatures of 110°C and higher for at least 5 and preferably at least 10 seconds. In fact, there is no maximum for the temperature and the heating time, but for practical reasons, the temperature will usually not exceed 180°C, while usually, the heating time will not be longer than 1 minute. Preferably, the pressure difference in the method according to the invention will be at least 0.3 bar, more preferably at least 0.5 bar, and will most preferably range between 2 and 10 bar.

By carrying out the heating step by the use of steam, the process can be accelerated.

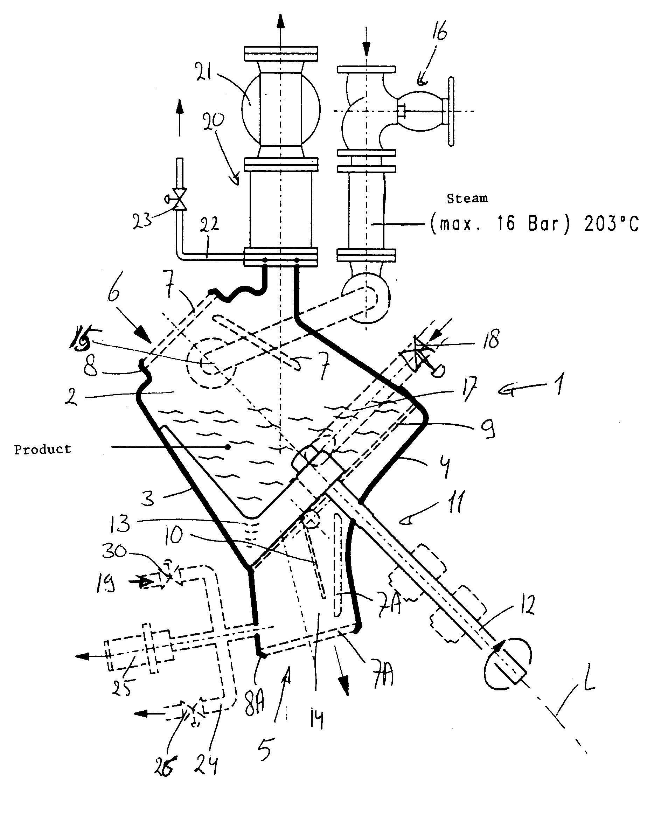

For carrying out the method according to the invention, fibrous material is usually introduced into a pressure vessel. Details of the apparatus to be applied will be further elaborated in the following description of the drawing.

To explain the invention, an exemplary embodiment of an apparatus for treating paper fibers will hereinafter be described, with reference to the accompanying drawing. This drawing shows, in a partially sectional side elevation, an apparatus comprising different possible steam inlet and outlet means. Although these means are all shown in one Figure, it will be understood from the specification that they need not all be present. According to its application, the apparatus may be provided with, or at least connected to, one or more of these or comparable steam inlets and/or steam outlets.

The apparatus 1 comprises a vessel 2 having a substantially frusto-conical casing 3 whose wide lower side is closed by a bottom wall 4 to which a neck-shaped product outlet 5 connects, which will be described in more detail hereinafter. Provided at the frusto-conical upper side of the vessel 2 is a product inlet 6, closable by a cover 7. For opening the cover 7, it can preferably be moved inside the vessel 2, while in the closed position it abuts against the inside of a flange 8 extending round the product inlet 6. This prevents in a simple manner the cover 7 from being pressed away by the steam pressure within the vessel 2. In a comparable manner, an inwardly movable cover 7A is mounted in the product outlet 5, against a flange 8A.

Adjacent the lower side of the vessel, over the entire section thereof, a grate 9 is provided which extends approximately at right angles to the longitudinal axis L of the vessel 2. The grate has meshes such that paper fibers can be substantially retained thereby, while moisture and steam can readily pass the grate 9. Provided in the grate, approximately above the product outlet 5, is a valve 10 which can be operated from the outside of the vessel 2 for passing product batchwise from the vessel 2 to the product outlet 5. Below the product outlet, a conveying apparatus (not shown) may be connected for discharging the product to a processing apparatus, while, through variation of the speed of the conveying apparatus, a continuous feed of treated product to the above-mentioned processing apparatus can be effected. To the product inlet, a product feeder may connect (not shown), for instance a hopper or a conveying belt.

During use, a drivable stirring gear 11 moves over the grate. This stirring gear comprises a substantially L-shaped stirring arm 13 which is mounted on a shaft 12 and extends along the grate surface and at least a part of the wall. By means of the stirring gear, a proper mixing can be obtained between the steam and the paper in the vessel.

Preferably, the vessel 2 is arranged so that the longitudinal axis L thereof includes an angle with the vertical. The product outlet 5 comprises a pipe-shaped part 14 which extends approximately in vertical direction and connects below the valve 10, adjacent the lowest part of the longitudinal wall 3 of the vessel 2. Hence, when the valve 10 is opened, product will already be forced from the vessel 2 in the direction of and through the product outlet 5 under the influence of gravity.

Hereinbelow, a series of possible steam feed means and steam discharge means will be discussed. An apparatus according to the invention is always provided with at least one of the steam feed means discussed or comparable therewith, and at least one of the steam outlet means discussed or comparable therewith.

Provided practically downstream of the product inlet 6, in the wall 3 of the vessel 2, is a first steam inlet 15 having a relatively large passage, closable by a first steam inlet valve 16. Via this steam inlet 15, a large quantity of preferably saturated steam can rapidly be introduced into the vessel 2, preferably in a direction at right angles to the longitudinal axis of the vessel 2, so as to obtain a proper distribution of the steam in the vessel 2. This first steam inlet 15 is located above the normal filling level of the vessel 2.

Provided adjacent the lower side of the vessel 2, in the wall 3 of the vessel 2 and preferably above the grate 9, is a second steam inlet 17 which effects an approximately tangential feed direction of steam. This second steam inlet 17 has a relatively small section and is of course closable, by means of a second steam feed control valve 18. Because of the tangential feed of the steam through this second steam inlet 17, a vortex or at least a stirring movement is created in the product in the vessel 2, whereby an even better mixing between fibers and steam is obtained. In particular when this second steam inlet 17 is employed, the stirring gear could be omitted, as the occasion arises.

Provided in the product outlet 5, adjacent the lower side thereof, is a third steam inlet 19, comprising a third steam feed control valve 30. This third steam inlet 19 has a relatively small section and is adapted to feed, via the product outlet 5 and the grate 9, steam into the vessel at a relatively high speed. Moreover, product may thereby be blown from the product outlet 5, if necessary.

Provided adjacent the upper side of the vessel 2 is a first steam outlet 20 having a relatively large section. To this outlet 20, a first steam outlet valve 21 connects whereby the passage of the steam outlet 20 can be controlled. This first steam outlet valve 21 can be opened and closed slowly as well as quickly, almost at once, depending on the desired pressure drop in the vessel 2. Below the first steam outlet valve 21, a steam outlet line 22 of a relatively slight section connects, closable by a second steam outlet valve 23. With this steam outlet valve 23, the steam pressure in the vessel 2 can be controlled relatively slowly and highly accurately.

In the product outlet 5, a third steam outlet 24 with control valve 26 is connected, which has a relatively slight section. In addition to this third steam outlet 24, a condensate discharge 25 is moreover connected, whereby condensate can be removed from the vessel 2. During the discharge of the condensate, some steam pressure may moreover flow away, so that this condensate discharge may in fact constitute a fourth steam outlet. Further, steam can escape from the vessel 2 when at least one of the covers 7, 7A is opened. Prior to the opening thereof, however, the steam pressure in the vessel must have been substantially removed so as to prevent uncontrolled pressure drop and paper discharge, and to increase the safety for the environment of the apparatus.

Of course, many variations to the apparatus shown are possible within the framework of this invention. For instance, the vessel may have a different shape, other product feed and discharge means may be provided, and steam feed and discharge means may be arranged in different manners, which means may moreover be designed so as to be controllable in different manners. The apparatus may be operable (semi-)automatically for carrying out an at least semi-continuous treatment of fibers. Moreover, all kinds of means may be provided for creating and maintaining the vortex of fibers in the vessel. These and many comparable variations are understood to fall within the framework of the invention.

After the closing of this pressure vessel, a pressure is built up and the fibrous material, which may or may not be presoaked, is heated. The fibers are preferably heated through and through.

Next, the pressure is let off in a short time so rapidly, for instance in less than 1 second, that the moisture in the fibers substantially changes into the vapor form and brings about the destruction of the fibers.

From the fibers which are obtained after the performance of the method according to the invention, solid cardboard or another paper product such as tissue paper can be prepared in a usual manner. Optionally, other, non-bulked paper fibers may be admixed in order to adjust for instance the strength properties of the paper product.

If so desired, the strength properties of the paper to be manufactured, for instance solid cardboard, and in particular the dry-strength properties, may also be enhanced by introducing additives. For that purpose, starches and natural gums are conventionally used in large volumes in the paper and cardboard industries. More recently, anionic and cationic derivatives of these starches and gums have been used in addition to other modified natural products, such as sodium carboxymethyl cellulose, and synthetic water-soluble polymers such as anionic and cationic polyacrylamides and polyvinyl alcohol.

Such additives are advantageous both in economical and in technical/technological sense. They provide the cardboard with an added value and can therefore also be advantageously applied in the method according to the invention and the thus obtained products.

The invention will presently be specified on the basis of the following, non-limitative example.

### Example

Sulfate cardboard fibers, obtained via Papierfabriek Doetinchem, were introduced into a pilot-scale steam explosion installation (Sepa-Stator; capacity 50 l; Goudsche Machinefabriek B.V., The Netherlands) in an amount of 250 g. With stirring (10 r.p.m.), steam was introduced under conditions as defined in Table 1. Next, the excess pressure was released explosively, i.e. very fast, via the release valve. The fibrous material as well as 250 g of untreated sulfate cardboard fibers were processed, in a known manner, into paper press proofs. After a known conditioning, the bulk was determined in µm, according to standard techniques. The results are set forth in Table 1.

**Table 1**

| *Results bulk analysis of steam-treated sulfate cardboard* | | |
|---|---|---|
| Treatment temperature, excess pressure, residence time, etc. | mass per surface area (g/m²) | bulk (µm) |
| control, no pretreatment | 100.5 | 177 |
| 129°C, 1.8 bar, 15 s, explosive release | 99.4 | 185 |
| 131°C, 1.9 bar, 60 s, explosive release | 100.7 | 192 |
| 195°C, 13.5 bar, 15 s, explosive release | 100.6 | 205 |

The bulk increases by 5-16%, depending on the conditions used.

## Claims

1. A method for increasing the bulk of fibrous material, wherein fibers are heated under pressure, after which the pressure is released rapidly.

2. A method according to claim 1, wherein fibrous material of vegetable origin is applied.

3. A method according to claim 1 or 2, wherein used, recycled fibrous material is applied as fibrous material.

4. A method according to any one of the preceding claims, wherein, prior to the heating step under pressure, the fibrous material is soaked in water.

5. A method for manufacturing solid cardboard, wherein as fibrous material, the fibrous material obtained by the use of the method according to any one of claims 1-4 is applied at least partly.

6. Use of a steam explosion for increasing the bulk of paper fibers.

7. An apparatus for treating fibrous material, comprising a vessel having an inlet for paper fibers and a product inlet and a product outlet, at least one steam inlet and at least one steam outlet, wherein the product inlet is located adjacent the upper side and the product outlet is located adjacent the lower side of the vessel, wherein means are provided for controlling the feed-in and feed-out velocity of steam in the vessel during use.

8. An apparatus according to claim 7, wherein, during use, the vessel is inclined.

9. An apparatus according to claim 7 or 8, wherein the steam outlet means are adapted to discharge an amount of steam present in the vessel batchwise.

10. An apparatus according to any one of claims 7-9, wherein stirring means are provided in the vessel, preferably disposed adjacent the bottom and the longitudinal wall of the vessel.

11. An apparatus according to any one of claims 7-10, wherein adjacent the lower side of the vessel, a grate is disposed whose mesh size is so that the paper fibers are substantially retained thereby, wherein valve means are provided in the grate for passing the product from the vessel to the product outlet.

12. An apparatus according to any one of claims 7-11, wherein at least one steam inlet is provided for feeding steam into the vessel in tangential direction, preferably in the lower half of the vessel.

13. An apparatus according to any one of claims 7-12, wherein at least one steam outlet is provided adjacent the upper side of the vessel.

14. An apparatus according to any one of claims 7-13, wherein at least one steam discharge is provided adjacent, preferably in the product outlet.

15. An apparatus according to any one of claims 7-14, wherein at least one condensate discharge is provided adjacent, preferably in the product outlet.
